# EUROPÄISCHE PATENTSCHRIFT

(11) **EP 2 834 100 B1**
(45) Veröffentlichungstag und Bekanntmachung des Hinweises auf die Patenterteilung: **19.05.2021**
(21) Anmeldenummer: 13706252.7
(22) Anmeldetag: 25.02.2013
(51) Int. Cl.: B60Q 1/00, F21V 8/00, B60Q 11/00, F21S 41/24, F21S 41/63, F21S 41/16, F21S 41/176, F21S 45/48, F21S 45/43, F21S 45/42

(54) **BELEUCHTUNGSVORRICHTUNG FÜR EIN KRAFTFAHRZEUG**
ILLUMINATING DEVICE FOR A VEHICLE
APPAREIL D'ÉCLAIRAGE POUR VÉHICULE

(30) Priorität: 03.04.2012 DE 102012205435
(43) Veröffentlichungstag der Anmeldung: 11.02.2015
(73) Patentinhaber: Bayerische Motoren Werke Aktiengesellschaft, 80809 München (DE)
(72) Erfinder: ERDL, Helmut, 83126 Flintsbach (DE); HANAFI, Abdelmalek, 80686 München (DE)
(86) Internationale Anmeldenummer: PCT/EP2013/053682
(87) Internationale Veröffentlichungsnummer: WO 2013/149765

(56) Entgegenhaltungen:
- EP-A1- 1 077 158
- DE-A1-102006 029 204
- FR-A3- 2 813 113
- JP-A- 2011 157 022
- US-A1- 2004 008 516
- US-A1- 2007 019 432
- US-A1- 2007 139 946
- US-A1- 2012 069 593

## Beschreibung

Die Erfindung betrifft eine Beleuchtungsvorrichtung für ein Kraftfahrzeug gemäß dem Oberbegriff des Anspruchs 1.

Im Bereich der Kraftfahrzeugtechnik kommen heutzutage vermehrt Beleuchtungsvorrichtungen basierend auf Halbleiterdioden, insbesondere in der Form von LEDs, zum Einsatz. Üblicherweise wird die Lichtquelle aus den Halbleiterdioden zusammen mit einer optischen Einrichtung, welche die Lichtverteilung der Beleuchtungsvorrichtung generiert, in einer Einheit zusammengefasst, die im Gehäuse der Beleuchtungsvorrichtung verbaut ist. Dabei erweist es sich als nachteilhaft, dass durch die Integration der Lichtquelle und der optischen Einrichtung in einer Einheit der Austausch einer defekten Lichtquelle aufwändig ist, da hierzu die gesamte Einheit aus dem Gehäuse der Beleuchtungsvorrichtung ausgebaut werden muss.

Die Druckschrift US 2012/0696593 A1 offenbart eine Beleuchtungsvorrichtung für ein Kraftfahrzeug mit den Merkmalen des Oberbegriffs des Anspruchs 1. Dabei ist eine Laserlichtquelle und eine optische Einrichtung vorgesehen, die über eine flexible optische Faser aneinander angebunden sind.

Die Druckschrift US 2007/139946 A1 zeigt eine Beleuchtungsvorrichtung für ein Kraftfahrzeug mit einer LED-Lichtquelle, einem Lichtleiter sowie einer optischen Struktur. Die optische Struktur streut das Licht der LED-Lichtquelle in eine Vielzahl von Richtungen.

In dem Dokument DE 100 40 302 A1 ist eine Signalleuchte für Kraftfahrzeuge offenbart, in der eine Lichtquelle mit einer Glühlampe vorgesehen ist. Das Licht der Glühlampe wird über einen flexiblen Lichtleiter zu Lichtauskoppelelementen geleitet.

Die Druckschrift EP 1 077 158 A1 offenbart eine Beleuchtungsvorrichtung für ein Kraftfahrzeug mit einer Lichtquelle, die über optische Fasern an eine optische Einrichtung mit einer Vielzahl von bewegbaren optischen Elementen gekoppelt ist.

In der Druckschrift DE 10 2006 029 204 A1 ist eine Beleuchtungsvorrichtung für ein Kraftfahrzeug mit einem Lichtleiter und einer Detektionsvorrichtung gezeigt. Über die Detektionsvorrichtung kann eine Beschädigung des Lichtleiters detektiert werden.

Die Druckschrift US 2007/019432 A1 offenbart eine Beleuchtungsvorrichtung für ein Kraftfahrzeug mit einer LED-Lichtquelle und einem Reflektor. Die LED-Lichtquelle umfasst eine Mehrzahl von Lichtmodulen, an denen eine Wärmesenke ausgebildet sein kann.

Das Dokument JP 2011 157022 A offenbart eine Beleuchtungsvorrichtung für Kraftfahrzeuge mit einer Laserlichtquelle und einem Scanner. In einer Ausführungsform erfolgt die Kopplung zwischen Laserlichtquelle und Scanner über einen Lichtwellenleiter.

In der Druckschrift US 2004/008516 A1 ist eine Beleuchtungsvorrichtung für ein Kraftfahrzeug mit einer LED-Lichtquelle sowie einer Mehrzahl von Reflektoren offenbart.

Aufgabe der Erfindung ist es, eine neuartige Beleuchtungsvorrichtung für ein Kraftfahrzeug zu schaffen, deren Bestandteile zumindest teilweise besser zugänglich sind.

Diese Aufgabe wird durch die Beleuchtungsvorrichtung gemäß Patentanspruch 1 gelöst. Weiterbildungen sind in den abhängigen Ansprüchen definiert.

Die erfindungsgemäße Beleuchtungsvorrichtung ist für ein Kraftfahrzeug, insbesondere einen PKW und gegebenenfalls auch einem LKW, vorgesehen. Sie umfasst eine Lichtquelle aus einer Anzahl von Halbleiterdioden sowie eine in einem Gehäuse angeordnete optische Einrichtung zur Erzeugung einer vorgegebenen Lichtverteilung aus dem Licht der Lichtquelle. Der Aufbau einer solchen optischen Einrichtung ist dabei an sich bekannt und kann je nach Anwendungsfall unterschiedlich sein. Insbesondere kann die optische Einrichtung einen oder mehrere Reflektoren (z.B. Halbschalenreflektoren) und/oder eine oder mehrere Linsen zur Erzeugung der entsprechenden Lichtverteilung umfassen.

In der erfindungsgemäßen Beleuchtungsvorrichtung ist die Lichtquelle starr mit dem Gehäuse verbunden und es ist ferner zumindest ein Lichtwellenleiter zum Leiten des Lichts der Lichtquelle zu der optischen Einrichtung vorgesehen. Die Lichtquelle ist somit vorzugsweise eine separate, von der optischen Einrichtung getrennte Einheit. Durch die starre Verbindung der Lichtquelle mit dem Gehäuse wird die Demontage und der Austausch der Lichtquelle erleichtert. Der Lichtwellenleiter gewährleistet dabei, dass das Licht der Lichtquelle zur optischen Einrichtung gelangt.

In der erfindungsgemäßen Beleuchtungsvorrichtung ist der zumindest eine Lichtwellenleiter ein flexibles Lichtfaserkabel. Aufgrund der Flexibilität des Lichtfaserkabels wird eine besonders einfache Montage und Demontage der Lichtquelle bzw. der optischen Einrichtung sichergestellt. Insbesondere entfällt bei der Verwendung eines flexiblen Lichtfaserkabels eine aufwändige mechanische Konstruktion, welchen den Einfall des Lichts der Lichtquelle in die optische Einrichtung sicherstellt.

In der Beleuchtungsvorrichtung der Erfindung ist die Lichtquelle (direkt) am Gehäuse befestigt. Hierdurch wird die Lichtquelle besonders gut zugänglich und kann gut demontiert werden. Vorzugsweise ist die Befestigung der Lichtquelle am Gehäuse derart ausgestaltet, dass die Lichtquelle von außerhalb des Gehäuses entfernt werden kann. Insbesondere ist zumindest ein Teil der Lichtquelle nicht vom Gehäuse umschlossen, wodurch die Zugänglichkeit der Lichtquelle weiter verbessert wird.

In der erfindungsgemäßen Beleuchtungsvorrichtung ist die optische Einrichtung eine abgeschlossene Einheit bzw. ein Modul, welches als Ganzes aus der Beleuchtungsvorrichtung ausbaubar ist, wodurch ein einfacher Austausch der optischen Einrichtung bei Defekten ermöglicht wird.

Die Lichtquelle umfasst vorzugsweise mehrere und insbesondere 3 bis 8 Halbleiterdioden. Ggf. kann die Lichtquelle jedoch auch nur eine Diode enthalten. In einer bevorzugten Ausführungsform enthält die Lichtquelle als Halbleiterdiode(n) eine oder mehrere Laserdioden und vorzugsweise ausschließlich Laserdioden. Laserdioden zeichnen sich durch eine sehr hohe Leuchtdichte bei kleinen Baumaßen aus. Vorzugsweise kommen in der erfindungsgemäßen Beleuchtungsvorrichtung Laserdioden mit einer jeweiligen Leistung von mindestens 1 W und insbesondere zwischen 1,5 und 5 W zum Einsatz.

In einer weiteren bevorzugten Ausführungsform der Erfindung wird mit der Lichtquelle monochromatisches Licht erzeugt, wobei ein Konvertierung selement zur Wandlung des Lichts in Weißlicht vorgesehen ist. Solche Konvertierungselemente sind an sich bekannt. Beispielsweise kann bei blauen Laserdioden mit einer Emissionswellenlänge von 450 nm/405 nm ein Phosphorkonvertierungsele ment aus Nitrid-Phosphor oder Oxidnitrid-Phosphor oder Cerium-dotiertem YAG-Phosphor zur Generierung von Weißlicht verwendet werden.

Das Konvertierungselement, welches insbesondere als eine Schicht ausgestaltet ist, kann je nach Ausgestaltung der Erfindung an unterschiedlichen Positionen angeordnet sein. Insbesondere kann das Konvertierungselement an einem benachbart zur Lichtquelle liegenden Ende des zumindest einen Lichtwellenleiters oder auch an einem entfernt zur Lichtquelle liegenden Ende des zumindest einen Lichtwellenleiters positioniert sein.

In einer weiteren bevorzugten Ausgestaltung der erfindungsgemäßen Beleuchtungsvorrichtung ist an einem entfernt zur Lichtquelle liegenden Ende des zumindest einen Lichtwellenleiters ein Sensor zur Detektion der Lichtintensität im Lichtwellenleiter vorgesehen. Hierdurch wird die Möglichkeit geschaffen, auf einfache Weise Defekte der Lichtquelle bzw. der Übertragungsstrecke hin zur optischen Einrichtung über einen einzelnen Sensor zu erfassen und somit Fehlfunktionen zu detektieren. Im Besonderen wird eine Fehlfunktion dann festgestellt, wenn die detektierte Lichtintensität unterhalb eines vorbestimmten Schwellwerts liegt, der auf einen Defekt der Lichtquelle bzw. des Lichtwellenleiters schließen lässt.

In einer bevorzugten Variante der erfindungsgemäßen Beleuchtungsvorrichtung ist an der Lichtquelle eine Wärmesenke zur Kühlung der Lichtquelle vorgesehen, wobei die Wärmesenke vorzugsweise mit kühleren Teilen des Kraftfahrzeugs thermisch gekoppelt ist. Der Begriff der Wärmesenke ist dabei weit zu verstehen und kann sowohl eine aktive als auch eine passive Kühleinrichtung bzw. Kombination solcher Kühleinrichtungen umfassen. Vorzugsweise ist die Wärmesenke zumindest teilweise außerhalb des Gehäuses angeordnet, so dass eine Kühlung der Wärmesenke durch Außenluft bewirkt werden kann. In einer besonders bevorzugten Variante umfasst die Wärmesenke einen passiven Kühlkörper, der vorzugsweise oberflächenvergrößernde Elemente, wie z.B. Rippen und/oder Lamellen und/oder Stifte, zur effektiven Kühlung beinhaltet.

Zur Verbesserung der Kühlleistung ist in einer weiteren Ausgestaltung der Erfindung an der Wärmesenke ein Lüfter zur Erzeugung eines Luftstroms vorgesehen. In einer weiteren Variante ist die Wärmesenke mit einer Luftführung zur Zufuhr von kühlender Luft hin zur Wärmesenke verbunden. Diese Variante kann insbesondere mit einer Wärmesenke mit Lüfter kombiniert werden, so dass die Luftführung als Ansaugführung dient, über die Luft aus einem kühleren Bereich im Kraftfahrzeug durch den Lüfter angesaugt wird.

In einer weiteren Ausgestaltung der erfindungsgemäßen Beleuchtungsvorrichtung ist die optische Einrichtung innerhalb des Gehäuses bewegbar und insbesondere verschwenkbar und/oder verdrehbar. Die Bewegung der optischen Einrichtung kann dabei z.B. über einen elektrischen Motor bewirkt werden, der vorzugsweise durch eine Steuereinrichtung des Kraftfahrzeugs gesteuert wird. Auf diese Weise können Funktionalitäten wie adaptives Kurvenlicht, Abbiegelicht und dergleichen realisiert werden.

Je nach Anwendungsfall kann die erfindungsgemäße Beleuchtungsvorrichtung verschiedene Funktionalitäten übernehmen. In einer Ausführungsform umfasst die Beleuchtungsvorrichtung einen Scheinwerfer. Ein Scheinwerfer zeichnet sich dadurch aus, dass er aktiv die Umgebung des Fahrzeugs ausleuchtet. Gegebenenfalls kann die erfindungsgemäße Beleuchtungsvorrichtung auch eine Signalleuchte umfassen, welche sich dadurch auszeichnet, dass sie lediglich zur Signalgebung für andere Verkehrsteilnehmer dient. In einer bevorzugten Variante ist die Beleuchtungsvorrichtung derart ausgestaltet, dass im Betrieb als vorbestimmte Lichtverteilung eine Abblendlichtcharakteristik generiert wird. Gegebenenfalls kann die Beleuchtungsvorrichtung auch derart ausgestaltet sein, dass sie im Betrieb als vorgegebene Lichtverteilung eine Fernlichtcharakteristik generiert.

Neben der erfindungsgemäßen Beleuchtungsvorrichtung betrifft die Erfindung ferner ein Kraftfahrzeug, welches eine oder mehrere der erfindungsgemäßen Beleuchtungsvorrichtungen umfasst.

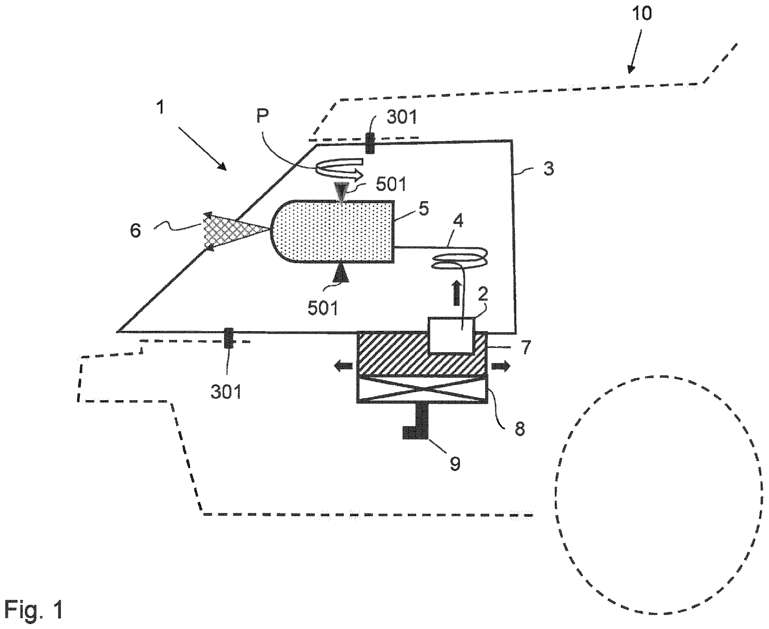

Ein Ausführungsbeispiel der Erfindung wird nachfolgend detailliert anhand der beigefügten Fig. 1 beschrieben. Diese Figur zeigt in schematischer Darstellung eine Variante der erfindungsgemäßen Beleuchtungsvorrichtung in der Form eines Scheinwerfers.

Fig. 1 zeigt eine Schnittansicht durch einen Frontscheinwerfer 1, der im vorderen Bereich eines gestrichelt angedeuteten Fahrzeugs 10 verbaut ist. Der Scheinwerfer umfasst eine Lichtquelle 2, welche an der Unterseite des Scheinwerfergehäuses 3 angeordnet ist und dessen Rückseite aus dem Gehäuse hervorsteht. Das Gehäuse 3 wird über lediglich schematisch angedeutete Fixierungen 301 an Unter- und Oberseite im Fahrzeug 10 gehalten. Die Lichtquelle 2 ist als Laserlichtquelle ausgestaltet und umfasst mehrere Laserdioden, welche im Gegensatz zu herkömmlichen LEDs deutlich stärker gekühlt werden müssen. Laserdioden können lediglich bis zu Umgebungstemperaturen von etwa 80 °C betrieben werden, wohingegen LEDs einen Betriebsbereich von bis zu 100 °C aufweisen. Zur Kühlung der Laserdioden ist in der Variante der Fig. 1 ein Kühler 7 vorgesehen, der weiter unten näher erläutert wird. Anstatt einer Laserlichtquelle kann in der Ausführungsform der Fig. 1 gegebenenfalls auch eine Lichtquelle aus herkömmlichen LEDs oder eine Kombination aus Laserdioden und LEDs verwendet werden.

Das Licht der Lichtquelle 2 wird über ein flexibles Lichtfaserkabel 4, welches vorzugsweise aus einer oder mehreren Glasfasern besteht, hin zu einer optischen Einrichtung in der Form eines Modul 5 geführt, welches eine Sekundäroptik beinhaltet, gemäß der aus dem Licht der Lichtquelle 2 die entsprechende Lichtverteilung 6 des Scheinwerfers 1 generiert wird. Entsprechende Optiken zur Erzeugung von vorbestimmten Lichtverteilungen sind dabei an sich bekannt und werden nicht im Detail erläutert. Insbesondere werden in solchen Optiken geeignete optische Elemente in der Form von Reflektoren und/oder Linsen verbaut. In der Ausführungsform der Fig. 1 ist das Modul 5 eine abgeschlossene Einheit, welche um eine vertikale und ggf. auch horizontale Achse über Drehelemente 501 verschwenkt werden kann, wie durch den Pfeil P angedeutet ist. Hierüber kann die Lichtverteilung geeignet eingestellt werden und die Funktionalität von Abbiegelicht, adaptivem Kurvenlicht und dergleichen realisiert werden. Die Laserdioden in der Lichtquelle 2 erzeugen monochromatisches Licht, wobei der Scheinwerfer 1 jedoch eine Weißlichtverteilung generiert. Zur Wandlung des monochromatischen Lichts in Weißlicht ist dabei an einem Ende des Lichtfaserkabels 4 eine Konverterschicht vorgesehen. Je nach Ausführungsform kann diese Konverterschicht an dem Ende des Kabels benachbart zur Lichtquelle 2 oder an dem Ende des Kabels benachbart zum Modul 5 vorgesehen sein.

Wie bereits oben erwähnt, wird die Lichtquelle 2 über einen Kühler 7 gekühlt. Der Kühler umfasst einen Kühlkörper aus einem gut wärmeleitendem Material, insbesondere aus Metall. Vorzugsweise sind Lamellen und/oder Rippen und/oder Stifte am Kühlkörper vorgesehen, um hierdurch seine Oberfläche zu vergrößern und eine guten Abtransport der Wärme von der Lichtquelle zu gewährleisten. Zur effizienten Zufuhr von kühlender Luft ist in der Ausführungsform der Fig. 1 ferner ein elektrisch betriebener Lüfter 8 vorgesehen, der über ein Ansaugrohr 9 Luft aus einem kühleren Bereich des Motorraums hin zum Kühlkörper führt. Anstatt eines passiv wärmeleitenden Kühlkörpers bzw. zusätzlich zu einem solchen Kühlkörpers kann gegebenenfalls auch eine aktiv wärmepumpende Kühleinrichtung, wie z.B. ein Peltier-Element, vorgesehen sein.

Die im Vorangegangenen beschriebene Ausführungsform der Erfindung weist eine Reihe von Vorteilen auf. Durch die flexible Faserverbindung zwischen der optischen Einrichtung und der starr am Gehäuse angeordneten Lichtquelle wird eine leichte Demontagemöglichkeit der Lichtquelle sowie eine präzise Justierbarkeit mit gleichzeitig hoher Variabilität der optischen Einrichtung erreicht. Die Flexibilität des Lichtfaserkabels erlaubt das Schwenken und Ausrichten der gesamten optischen Einrichtung innerhalb der Beleuchtungsvorrichtung. Ferner lassen sich die Enden des Lichtfaserkabels einfach und präzise mechanisch mit der optischen Einrichtung bzw. der Lichtquelle verbinden. Außerdem ist die Tauschbarkeit der Lichtquelle wesentlich einfacher zu realisieren. Darüber hinaus lassen sich gegebenenfalls Defekte des Lichtleiterkabels bzw. der Lichtquelle auf einfache Weise durch einen Lichtintensitätssensor am benachbart zur optischen Einrichtung liegenden Kabelende detektieren.

### Bezugszeichenliste

- 1: Beleuchtungsvorrichtung
- 2: Lichtquelle
- 3: Gehäuse
- 301: Fixierung
- 4: Lichtfaserkabel
- 5: optische Einrichtung
- 501: Drehelement
- 6: Lichtverteilung
- 7: Kühler
- 8: Lüfter
- 9: Ansaugführung
- 10: Kraftfahrzeug
- P: Pfeil

## Patentansprüche

1. Beleuchtungsvorrichtung für ein Kraftfahrzeug (10), umfassend eine Lichtquelle (2) aus einer Anzahl von Halbleiterdioden umfassend eine oder mehrere Laserdioden sowie eine in einem Gehäuse (3) angeordnete optische Einrichtung (5) zur Erzeugung einer vorgegebenen Lichtverteilung (6) aus dem Licht der Lichtquelle (2), wobei die Lichtquelle (2) eine separate, von der optischen Einrichtung (5) getrennte Einheit ist und zumindest ein Lichtwellenleiter (4) in der Form eines flexiblen Lichtfaserkabels vorgesehen ist, der das Licht der Lichtquelle (2) zu der optischen Einrichtung (5) leitet,
**dadurch gekennzeichnet, dass** an der Lichtquelle (2) eine Wärmesenke (7) zur Kühlung der Lichtquelle (2) vorgesehen ist, wobei die Wärmesenke (7) zumindest teilweise außerhalb des Gehäuses (3) angeordnet ist,
wobei ein Teil der Lichtquelle (2) nicht vom Gehäuse (3) umschlossen ist und ein Teil der Lichtquelle (2) vom Gehäuse (3) umschlossen ist,
wobei die Lichtquelle (2) starr am Gehäuse (3) derart befestigt ist, dass die Demontage und der Austausch der Lichtquelle (2) von außerhalb des Gehäuses (3) ermöglicht sind.

2. Beleuchtungsvorrichtung nach Anspruch 1, **dadurch gekennzeichnet, dass** die Lichtquelle (2) monochromatisches Licht erzeugt und ein Konvertierungselement zur Wandlung des Lichts der Lichtquelle (2) in Weißlicht vorgesehen ist.

3. Beleuchtungsvorrichtung nach Anspruch 2, **dadurch gekennzeichnet, dass** das Konvertierungselement an einem benachbart zur Lichtquelle (2) liegenden Ende des zumindest einen Lichtwellenleiters (4) oder an einem entfernt zur Lichtquelle (2) liegenden Ende des zumindest einen Lichtwellenleiters (4) angeordnet ist.

4. Beleuchtungsvorrichtung nach einem der vorhergehenden Ansprüche, **dadurch gekennzeichnet, dass** an einem entfernt zur Lichtquelle (2) liegenden Ende des zumindest einen Lichtwellenleiters (2) ein Sensor zur Detektion der Lichtintensität im Lichtwellenleiter (2) vorgesehen ist.

5. Beleuchtungsvorrichtung nach einem der vorhergehenden Ansprüche, **dadurch gekennzeichnet, dass** die Wärmesenke (2) mit kühleren Teilen des Kraftfahrzeugs (10) thermisch gekoppelt ist.

6. Beleuchtungsvorrichtung nach einem der vorhergehenden Ansprüche, **dadurch gekennzeichnet, dass** die Wärmesenke einen Kühlkörper umfasst, der vorzugsweise Rippen und/oder Lamellen und/oder Stifte beinhaltet.

7. Beleuchtungsvorrichtung nach einem der vorhergehenden Ansprüche, **dadurch gekennzeichnet, dass** an der Wärmesenke (7) ein Lüfter (8) zur Erzeugung eines Luftstroms vorgesehen ist.

8. Beleuchtungsvorrichtung nach einem der vorhergehenden Ansprüche, **dadurch gekennzeichnet, dass** die Wärmesenke (2) mit einer Luftführung (9) zur Zufuhr von Luft hin zur Wärmesenke (2) verbunden ist.

9. Beleuchtungsvorrichtung nach einem der vorhergehenden Ansprüche, **dadurch gekennzeichnet, dass** die optische Einrichtung (5) innerhalb des Gehäuses (3) bewegbar ist.

10. Beleuchtungsvorrichtung nach einem der vorhergehenden Ansprüche, **dadurch gekennzeichnet, dass** die optische Einrichtung (5) ein Modul ist, welches als Ganzes aus der Beleuchtungsvorrichtung (1) ausbaubar ist.

11. Beleuchtungsvorrichtung nach einem der vorhergehenden Ansprüche, **dadurch gekennzeichnet, dass** die Beleuchtungsvorrichtung (1) eine Signalleuchte und/oder einen Scheinwerfer umfasst.

12. Kraftfahrzeug, umfassend eine oder mehrere Beleuchtungsvorrichtungen (1) nach einem der vorhergehenden Ansprüche.

## Claims

1. Illumination apparatus for a motor vehicle (10), comprising a light source (2) made of a number of semiconductor diodes comprising one or more laser diodes, and an optical device (5), arranged in a housing (3), for generating a specified light distribution (6) from the light of the light source (2), wherein the light source (2) is a separate unit, apart from the optical device (5), and at least one optical waveguide (4) in the form of a flexible fibre-optic cable is provided that guides the light from the light source (2) to the optical device (5),
**characterized in that** a heat sink (7) for cooling the light source (2) is provided at the light source (2), wherein the heat sink (7) is arranged at least partially outside the housing (3),
wherein a part of the light source (2) is not enclosed by the housing (3) and a part of the light source (2) is enclosed by the housing (3),
wherein the light source (2) is mounted rigidly to the housing (3) such that disassembly and replacement of the light source (2) from outside the housing (3) are made possible.

2. Illumination apparatus according to Claim 1, **characterized in that** the light source (2) generates monochromatic light and a conversion element for converting the light from the light source (2) into white light is provided.

3. Illumination apparatus according to Claim 2, **characterized in that** the conversion element is arranged at an end of the at least one optical waveguide (4) that is adjacent to the light source (2) or at an end of the at least one optical waveguide (4) that is remote from the light source (2).

4. Illumination apparatus according to one of the preceding claims, **characterized in that** a sensor for detecting the light intensity in the optical waveguide (2) is provided at an end of the at least one optical waveguide (2) that is remote from the light source (2).

5. Illumination apparatus according to one of the preceding claims, **characterized in that** the heat sink (2) is thermally coupled to cooler parts of the motor vehicle (10) .

6. Illumination apparatus according to one of the preceding claims, **characterized in that** the heat sink comprises a cooling body preferably including ribs and/or fins and/or pins.

7. Illumination apparatus according to one of the preceding claims, **characterized in that** a fan (8) for generating a flow of air is provided at the heat sink (7) .

8. Illumination apparatus according to one of the preceding claims, **characterized in that** the heat sink (2) is connected to an air guide (9) for supplying air to the heat sink (2).

9. Illumination apparatus according to one of the preceding claims, **characterized in that** the optical device (5) is movable within the housing (3).

10. Illumination apparatus according to one of the preceding claims, **characterized in that** the optical device (5) is a module that is removable as a whole from the illumination apparatus (1).

11. Illumination apparatus according to one of the preceding claims, **characterized in that** the illumination apparatus (1) comprises a signal lamp and/or a headlight.

12. Motor vehicle, comprising one or more illumination apparatuses (1) according to one of the preceding claims.

## Revendications

1. Dispositif d'éclairage pour un véhicule automobile (10), comprenant une source de lumière (2) composée d'un certain nombre de diodes à semi-conducteurs, y compris une ou plusieurs diodes laser, ainsi qu'un équipement optique (5) disposé dans un boîtier (3) pour générer une répartition de lumière prédéfinie (6) à partir de la lumière de la source de lumière (2), dans lequel la source de lumière (2) est une unité séparée, distincte de l'équipement optique (5), et au moins un guide d'ondes optiques (4) sous la forme d'un câble optique flexible est prévu qui guide la lumière de la source de lumière (2) vers l'équipement optique (5),
**caractérisé en ce qu'**un puits thermique (7) est prévu au niveau de la source de lumière (2) pour refroidir la source de lumière (2), le puits thermique (7) étant disposé au moins en partie à l'extérieur du boîtier (3),
une partie de la source de lumière (2) n'étant pas entourée du boîtier (3), et une partie de la source de lumière (2) est entourée du boîtier (3),
la source de lumière (2) étant fixée rigidement au boîtier (3) de façon à permettre le démontage et le remplacement de la source de lumière (2) à partir de l'extérieur du boîtier (3).

2. Dispositif d'éclairage selon la revendication 1, **caractérisé en ce que** la source de lumière (2) génère une lumière monochromatique, et un élément de conversion est prévu pour convertir la lumière de la source de lumière (2) en lumière blanche.

3. Dispositif d'éclairage selon la revendication 2, **caractérisé en ce que** l'élément de conversion est disposé à une extrémité dudit au moins un guide d'ondes optiques (4), située de manière adjacente à la source de lumière (2), ou à une extrémité dudit au moins un guide d'ondes optiques (4), située de manière éloignée de la source de lumière (2).

4. Dispositif d'éclairage selon l'une quelconque des revendications précédentes, **caractérisé en ce qu'**à une extrémité dudit au moins un guide d'ondes optiques (2), située de manière éloignée de la source de lumière (2), un capteur est prévu pour détecter l'intensité de lumière dans le guide d'ondes optiques (2).

5. Dispositif d'éclairage selon l'une quelconque des revendications précédentes, **caractérisé en ce que** le puits thermique (2) est couplé thermiquement à des parties plus froides du véhicule automobile (10).

6. Dispositif d'éclairage selon l'une quelconque des revendications précédentes, **caractérisé en ce que** le puits thermique comprend un dissipateur thermique qui comprend de préférence des nervures et/ou des lamelles et/ou des broches.

7. Dispositif d'éclairage selon l'une quelconque des revendications précédentes, **caractérisé en ce qu'**un ventilateur (8) pour générer un courant d'air est prévu au niveau du puits thermique (7).

8. Dispositif d'éclairage selon l'une quelconque des revendications précédentes, **caractérisé en ce que** le puits thermique (2) est relié à un conduit de ventilation (9) pour apporter de l'air jusqu'au puits thermique (2).

9. Dispositif d'éclairage selon l'une quelconque des revendications précédentes, **caractérisé en ce que** l'équipement optique (5) peut être déplacé à l'intérieur du boîtier (3).

10. Dispositif d'éclairage selon l'une quelconque des revendications précédentes, **caractérisé en ce que** l'équipement optique (5) est un module qui peut être retiré dans son ensemble du dispositif d'éclairage (1).

11. Dispositif d'éclairage selon l'une quelconque des revendications précédentes, **caractérisé en ce que** le dispositif d'éclairage (1) comprenant un feu de signalisation et/ou un phare.

12. Véhicule automobile, comprenant un ou plusieurs dispositifs d'éclairage (1) selon l'une quelconque des revendications précédentes.
